# EUROPEAN PATENT APPLICATION

(11) **EP 4 443 219 A1**
(43) Date of publication of application: **09.10.2024**
(21) Application number: 23166349.3
(22) Date of filing: 03.04.2023
(51) Int. Cl.: G02C 13/00, G01B 11/24, G06T 7/70, G06T 15/00, G06T 19/00

(54) **APPARATUS AND METHOD SUITABLE FOR SCANNING A SPECTACLE FRAME**

(71) Applicant: Carl Zeiss Vision International GmbH, 73430 Aalen (DE)
(72) Inventor: KOEHLER, Johannes, 67663 Kaiserslautern (DE)
(74) Representative: Kraus & Lederer PartGmbB

(57) **Abstract**

An apparatus suitable for scanning a spectacle frame (112) is provided. The apparatus includes a first holder (15) for receiving the spectacle frame (112); a first rotation component (14) configured to rotate the first holder (15) about a first axis; a second holder (110) for receiving a camera device, and a second rotation component (12) independent from the first rotation component (14) and configured to rotate the second holder (110) about a second axis.

## Description

The present application relates to apparatuses suitable for scanning a spectacle frame and to corresponding methods.

For various applications like virtual try-on or virtual determination of centration parameters, a representation of a spectacle frame in form of data on a computer is needed, for example as a 3D model of the spectacle frame or for example data allowing so-called neural rendering. A 3D model of a spectacle frame may for example consist of vertices connected by lines and additional colour and transparency data. In neural rendering, based on images of the spectacle frame taken from different perspectives a neural network is trained, and using the trained neural network the spectacle frame may be rendered in an image on a computer screen also for different perspectives other than the perspectives where the images were made. Therefore, the trained neural network serves essentially the same function as the 3D model when it comes to generating images of the spectacle frame.

Virtual try-on relates to applications where for example a customer can select spectacle frames online, without the need to go to a store where a plurality of different spectacle frames are physically present. The selected frames are then shown on a model of the customer's head, to give a visual impression. Such a virtual try-on is for example described in WO2016/135078 A1. Centration, where centration parameters for fitting spectacle glasses into a spectacle frame are determined, is for example described in WO2017/174525 A1. While in some approaches described in this document centration is performed on a person using real spectacle frames, in other approaches described a model of the spectacle frame is used.

In particular for applications like virtual try-on, the spectacle frame should appear for example on a computer screen fitted to a head of the customer as realistically as possible, such that the customer gets a correct visual impression of how the spectacle frame looks on the customer. This relates both to the form and to material properties like colour or opacity (also referred to as transparency) of the spectacle frame or other properties determining the appearance of the spectacle frame.

In this respect, a spectacle frame, as used herein, refers to an entity intended to accommodate spectacle glasses, and also includes rimless spectacle frames.

For all such applications, real spectacle frames of various types have to be captured, such that corresponding data is provided which then can be used to generate spectacle frame models, to render spectacle frames etc. For acquisition of data, in conventional approaches complex scanning setups such as light domes, which consists of a plurality of cameras and/or light sources, are used. Such systems may have many cameras and many light sources for fast acquisition. Examples are the so called Esper light cage https:/www.esperhq.com/, or devices as described in Johannes Koehler et al "A full spherical device for simultaneous geometry and reflectance acquisition", 2013 IEEE workshop on applications of computer vision.

In other approaches, movable cameras and/or light sources are used, similar to a gonioreflectometer. This approach is for example described in Wojciech Matusik et al, "A Data Driven Reflectance Model", ACM transactions on graphics (SIGGRAPH 2003), 2003 and can be used to determine material parameters, like the BRDF, Bidirectional Reflectance Distribution Function.

To separate the object, i.e. the spectacle frame, from the background, a background screen having a predefined colour or backlighting may be used in such approaches.

A different approach does not use such complex hardware, but tries to operate on images taken without such apparatuses, for example by freehand images. Such approaches are for example described by Stephen Lombardi et al, "Reflectance and Illumination Recovery in the Wild", IEEE transactions on pattern analysis and machine intelligence, volume 38 issued 1, January 2016 or A. Lattos et al., "Avatar Me: Realistically Renderable 3D facial construction "in the wild"", ArXiv: 2003.13845. Another example for the use of freehand images is shown in https://grail.cs.washington.edu/projects/sunstage/.

However, such an approach makes the anyhow highly underconstrained problem of separating intrinsic surface colours from effects caused by the then unknown illumination difficult and unrobust.

It is therefore an object to provide an apparatus and corresponding method suitable for scanning a spectacle frame, which may for example generate similar data as the above mentioned complex scanning setups, but with less hardware effort.

According to a first aspect, an apparatus suitable for scanning a spectacle frame is provided, comprising:
- a first holder for receiving the spectacle frame,
- a first rotation component configured to rotate the first holder about a first axis, and
- a second holder for receiving a camera device, characterized by
- a second rotation component independent from the first rotation component and configured to rotate the second holder about a second axis.

With such a simple apparatus, various types of image data may be taken. In particular, by using the first rotation component, the first holder and therefore a spectacle frame provided on the first holder may be rotated. If the apparatus is used in a normal room, i.e. a room which has no special uniform lighting conditions, this means that the light incident on the spectacle frame changes (for example light from a window or from some room lighting) then falls on the spectacle frame from different relative directions. Moreover, also the perspective changes, when the camera device position (position of the second holder) remains unchanged. Therefore, the spectacle frame is recorded from different perspectives. Moreover, by the second rotation component, the direction a camera of the camera device faces may be changed, which in a common room with non-uniform walls (for example pictures on walls, different furniture etc.) leads to different backgrounds. Preferably, as will be explained below in more detail, this is done in a way where the perspective (direction) from which the camera device captures images of the spectacle frame remains unchanged. This may be used to robustly separate the spectacle frame from the background, estimate the transparency of the spectacle frame (as different backgrounds shine through different fully transparent or semi-transparent parts of the spectacle frame) and the true colour of the spectacle frame separated from the background. In other words, the apparatus as defined above makes use of the fact that common rooms, which do not specifically have for example uniform walls or uniform lighting, may be used to provide images of the spectacle frames against different backgrounds and with illumination from different directions. Furthermore, with non-uniform lighting conditions this may yield raw material or reflectance data of the spectacle frame, which may for example be used to solve relighting problems such as BRDF (Bidirectional Reflectance Distribution Function) estimation.

In the above apparatus, a holder refers to any entity, which may hold or receive the respective object (spectacle frame or camera device). For example, the first holder may be a simple table on which the spectacle frame is put, but may also include clamps or other mechanical fastening means to hold the spectacle frame. The second holder may be designed to receive a dedicated camera device fixedly connected with the apparatus, for example in the form of a cavity receiving the camera device, screws or other fastening means for fastening the camera device or glue for holding the camera device. In other embodiments, the second holder may be adapted to receive, as the camera device, a mobile device including one or more cameras, like a smartphone or tablet PC, the camera of which then serves as the camera of the mobile device serving as camera device. In such a case, no dedicated camera device is required, but simply a smartphone or tablet PC, which is available for many persons anyway, may be fixed to the apparatus and the camera of which may then be used as camera for the device. In this respect, a camera device refers to a device including one or more cameras, at least one of which, when the camera device is accommodated by the second holder, is orientated to capture images of the spectacle frame on the first holder.

A rotation component is a component, which enables the corresponding rotation of the first or second holder. Such a rotation component may include conventional mechanical components like one or more rotatable axes, bearings, motors like electric motors for driving the rotation, etc. That the second rotation component is independent from the first rotation component means that the rotation components operate independently from each other to cause the respective rotations. Therefore, the first rotation component may rotate the first holder about the first axis while the second rotation component is inactive and does not rotate the second holder about a second axis , the first rotation component may be inactive and not rotate the first holder about the first axis while the second rotation component rotates the second holder about a second axis, or the first rotation component may rotate the first holder about the first axis while concurrently the second rotation component rotates the second holder about a second axis. Also, both rotation components may be inactive at the same time (no rotation). Furthermore, in some embodiments rotation speeds of the first and second rotation components may be set independently from each other, whereas in other embodiments the rotation speeds may be fixed (not settable).

Preferably, the first axis coincides with the second axis. This makes the arrangement and the geometry easier and may facilitate following calculations based on the images taken. However, in other embodiments different axes may be used, possibly with corresponding more complex calculations to take for example of said axis into account.

In one preferred embodiment, the second component jointly rotates the second holder and the first holder. In other words, the second rotation component causes a rotation of the first and second holders about the second axis together, such that the relative positions of the second and the first holder and therefore of the spectacle frame and the camera device remains unchanged, but their position about the second axis changes jointly. In this way, when the rotation about the second axis occurs, the perspective under which the camera device may capture the spectacle frame stays the same, while the background of the spectacle frame placed on the first holder changes according to the environment. This in turn enables the above-mentioned measurements in a precise manner, as it is ensured by design that the perspective remains the same.

In another embodiment, the second rotation component may be configured to rotate the second holder relative to the first holder, in contrast to the joint rotation above. Also in this way, by a coordinated rotation of the first and second rotation components, it may be achieved that the relative position of the first and second holders may be kept constant, while their orientation in space changes, such that different backgrounds may be taken. However, as in this case two rotation components need to be controlled, it may be more difficult to precisely keep the relative position between first and second holder constant.

The above two possibilities may also be combined, in that the second rotation component jointly rotates the second holder and the first holder, and a third rotation component is configured to rotate the second holder relative to the first holder independent from the first and second rotation components. This may lead to additional flexibility, for example to capture images of the spectacle frames from different directions while the position of the spectacle frame in space remains the same, and therefore with different backgrounds.

The apparatus may also include a controller configured to control the first rotation component, the second rotation component, and also the camera device and the third rotation component, if provided, to provide rotations and capture images as described above. In some embodiments, where the camera is a camera of a mobile device as explained above, the controlling may be mainly implemented in software running on the mobile device. The apparatus may then include a controller configured to receive commands for actuating the first, second and/or third rotation components based on commands received from the smartphone using wire-based or wireless communication, for example via Bluetooth or WIFI as wireless communication examples or via a USB (Universal Serial Bus) connector of the smartphone as an example for a wire-based communication.

Besides the images as described above, where for example only the first holder is rotated by the first rotation components to capture the spectacle frame from different perspectives, and then the first and second holders are rotated jointly, either by the second rotation component alone in the first alternative described above or by joint rotation of the first and second rotation components in the second alternative described above, also other kinds of images may be captured controlled by the controller and possibly the mobile device. For example for calibration of incident light a shiny sphere, i.e. reflective sphere, may be placed on the first holder, and then by capturing the shiny sphere from different positions an environment map may be provided, as the environment is reflected in the sphere. This environment map may be used to probe or calibrate the incident light. This may be done in a conventional manner, for example as described in P. Debevec, "Rendering Synthetic Objects into Real Scenes: Bridging Traditional and Image-based Graphics with Global Illumination and High Dynamic Range Photography", SIGGRAPH 98: Proceedings of the 25^{th} annual conference on Computer graphics and interactive techniques, 1998. Techniques without a sphere also exist, for example as discussed in R. Szeliski et al., "Creating Full View Panoramic Image Mosaics and Environment Maps", DOI: 10.1145/258734.258861. If a mobile device like a smartphone having both a so called front camera and a back camera is used, for example the back camera (which has usually a higher resolution) may be used to capture images of the spectacle frame placed on the first holder, and the other camera (for example the front camera, which usually has a low resolution) may be used to capture images of the environment. Also, in this case an environment map may be captured. It should be noted that the above does not preclude the use of additional sensors like depth sensors for scanning the spectacle. Also a dedicated camera device fixedly connected to the apparatus may include two cameras as explained above for the mobile device case.

With using a front and a back camera or generally two cameras the camera device can also adapt to changing environment light, as incident light may be captured by the camera facing away from the spectacle frame (front camera in the example above).

For manufacturing the apparatuses above, corresponding data may be provided to manufacturing machines, Therefore, a data set in the form of a computer-readable data signal is provided, comprising at least one kind of the following kinds of data: (i) a virtual (e.g. analytical and/or numerical) representation of the apparatus as described above configured to be fed to one or more manufacturing machines for manufacturing the apparatus or (ii) data containing computer-readable instructions for controlling one or more manufacturing machines to manufacture the apparatus as described above. Furthermore, a data set stored on a computer-readable medium is provided, comprising at least one kind of the following kinds of data: (i) a virtual (e.g. analytical and/or numerical) representation of the apparatus described above configured to be fed to one or more manufacturing machines for manufacturing the apparatus or (ii) data containing computer-readable instructions for controlling one or more manufacturing machines to manufacture the apparatus as described above.

According to a second aspect, a method of operating the apparatus as explained above is provided, characterized by comprising:
operating the apparatus to capture images of a spectacle frame under different perspectives, and
operating the apparatus to capture images of the spectacle frame with different backgrounds.

In other words, the method comprises operating the apparatus as described for the controller above, and may comprise the various possibilities described above for the controller.

For implementing the controller, the controller (e.g. mobile device) may be programmed accordingly using a computer program comprising instructions which, when the program is executed by the controller, cause the controller to control the apparatus as described above, for example by the methods described above. A computer-readable storage medium (e.g. an USB stick, disc, flash memory or the like) storing the computer program and a data carrier signal carrying the computer program are also provided. The computer program may be stored on a non-transitory tangible computer-readable storage medium.

The image data thus acquired by the camera may be further processed in a variety of ways, for example as in conventional approaches. Data processing may for example also include performing an alignment between images of the spectacle frame, for example between different images using common background portions or using the object by images taken through a full turn of the first holder. The above mentioned computation of an environment map for example based on reflections from a sphere or the camera facing away from the spectacle frame may also be used. It should be noted that in some embodiments the positioning of the apparatus may be so precise that the rotation of the first rotation component and the second rotation component is more precise than the resolution of the camera, which facilitates the alignment.

Furthermore, calibration measurements may be performed, for example for calibrating the camera positions using markers provided on the apparatus. Also sensors for example sensing the rotational position of the first rotation component or the second rotation component may be calibrated. This calibration is a technique known to the skilled person. For example, a Structure from Motion- based calibration can be used. In such an approach, calibration parameters are iteratively estimated from 2d correspondences between images. For this, the markers are designed such that they generate many correspondences between images. Details of such a calibration may be found in the chapter "Camera and Projector Calibration" in J.D. Köhler, "Enhanced Usability and Applicability for Simultaneous Geometry and Reflectance Acquitsion", Dissertation, University of Kaiserslautern, 2015, Verlag Dr. Hut, ISBN 978-3-8439-2465-8.

Further processing steps may include generating silhouette images of the spectacle frame, BRDF estimation, photometric geometry optimization or transparency computation. Some of these methods are described in Fred E. Nicodemus: "Directional Reflectance and Emissivity of an Opaque Surface", Applied Optics, Vol. 4 Nr. 7, 1965; https://substance3d.adobe.com/tutorials/courses/the-pbr-guide-part-1 :"The PBR Guide By Allegorithmic - Part 1"; T. Noell "Efficient Representation of Captured Geometry and Reflectance", Dissertation, University of Kaiserlautern, 2015, Verlag Dr. Hut,ISBN 978-3-8439-2326-2, ; Guarnarea, "BRDF Representation and Acquisition", EG '16 Proceedings of the 37th Annual Conference of the European Association for Computer Graphics: State of the Art Reports, May 2016, http://mesh.brown.edu/3DP-2018/refs/Ackermann-now2015.pdf "A survey if photometric stereo techniques"; or Srinivasan Pratul et al: "NeRV: Neural Reflectance and Visibility Fields for Relighting and View Synthesis"; ArXiv 2012.03927.

In other words, the image data obtained by the apparatus may be used for conventional processing of such data, and subsequently for applications like centration or virtual try-on as discussed above.

Various embodiments will not be discussed in detail referring to the attached drawings.
Fig. 1 is a schematic representation of an apparatus according to an embodiment.
Fig. 2 is a schematic diagram illustrating the use of calibration markers in the apparatus of Fig. 1.
Figures 3 and 4 illustrate modifications of the apparatus of Fig. 1.
Fig. 5 is a flowchart illustrating a method according to an embodiment.
Fig. 6 is a diagram used for illustration of operation of apparatuses of the embodiments of Figures 1 to 4.
Figs. 7A to 7D are further diagrams used for illustration of operation of apparatuses of the embodiments of Figures 1 to 4.
Figs. 8A and 8B are further diagrams used for illustration of operation of apparatuses of the embodiments of Figures 1 to 4.

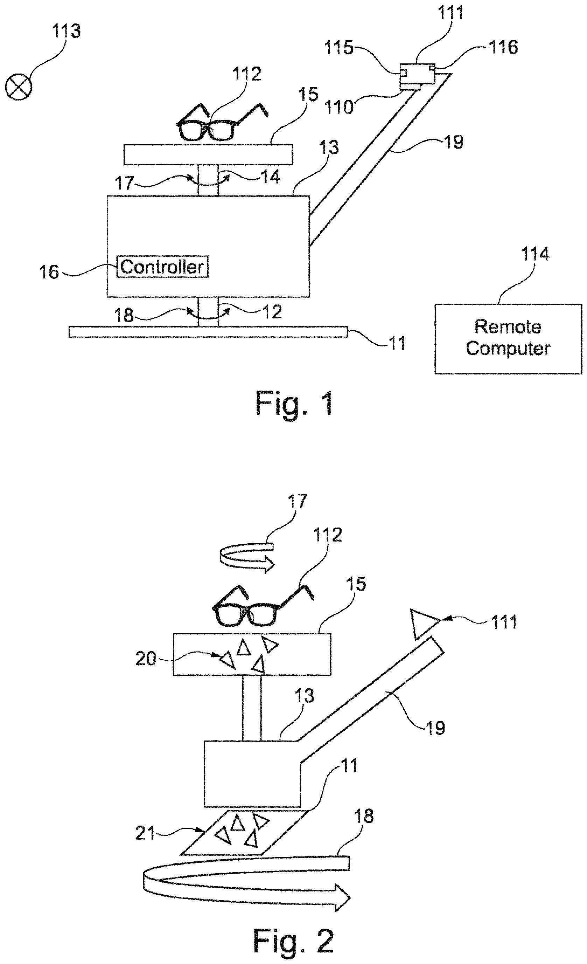

Fig. 1 illustrates an apparatus suitable for scanning, i.e. capturing images of, a spectacle frame 112 according to an embodiment.

For accommodating spectacle frame 112, the apparatus of Fig. 1 comprises a table 15 serving as a first holder, and spectacle frame 112 is placed on table 15. Table 15 is rotatable by a first rotation component 14 about a first axis, as indicated by an arrow 17. Rotation component 15 is coupled to a central part 13 of the apparatus of Fig. 1. Central part 13 has an arm 19 extending therefrom, and a second holder 110 for receiving a camera device 111 is provided on arm 19. Camera device 111 may be fixedly connected to the apparatus, or, as explained above, may be a mobile device like a smartphone received by second holder 110.

Camera device 111 includes a first camera 115 and a second camera 116. For example, when camera device 111 is a smartphone, first camera 115 may be the so called back camera of the smartphone on a side opposite the display, and second camera 116 may be a front camera on a same side as the display on a same side as the display of the smartphone. Often, the back camera has a higher resolution than the front camera. First camera 115 faces table 15 and hence spectacle frame 112 to capture images of spectacle frame 112. Second camera 116 faces away from table 15 and may be used to capture images of the environment, for example for lighting calibration, as explained above.

Central part 13 is coupled to a stationary base plate 11 via a second rotation component 12, with which central part 13 with arm 19, first rotation component 14, table 15, second holder 110 and camera device 111 may be rotated about a second axis, which in this case coincides with a first axis, as indicated by an arrow 18. In other words, essentially the complete apparatus apart from base plate 11 may be rotated.

The apparatus of Fig. 1 further includes a controller 16. Controller 16 controls the rotation caused by first rotation component 14 and second rotation component 12. If camera device 111 is a dedicated camera device fixedly connected to the apparatus of Fig. 1, controller 16 may also control camera device 111. In case camera device 111 is a mobile device like a smartphone, operation of the apparatus of Fig. 1 including operation of camera device 111 may be controlled by software running on the mobile device ("app"), and to control the rotation, camera device 111 may send control signals to controller 16 in a wire-based or wireless manner, as explained above, to cause rotation as indicated by arrows 17 and/or 18.

In operation, the apparatus of Fig. 1 is placed in a non-uniform environment, which has some illumination as represented by a lamp 113 (for example a lamp provided in a room, light coming from one more windows, or combinations thereof). Furthermore, a typical room provides different backgrounds, for example different wall decorations, furniture etc.

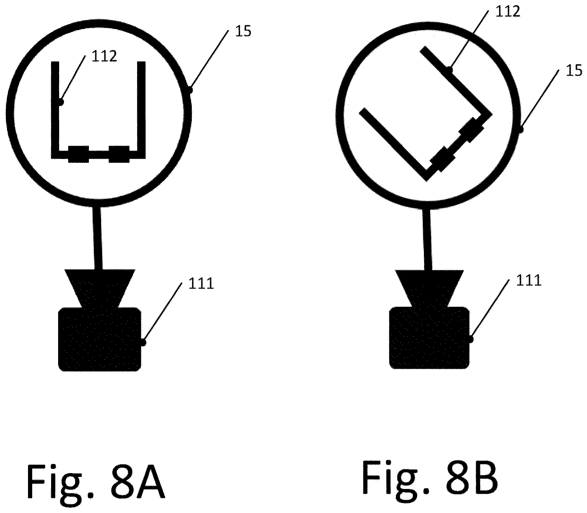

Controller 16 controls the apparatus of Fig. 1 at least in two different image recording modes. In a first mode, first rotation component 14 rotates table 15, whereas second rotation component 12 remains stationary. This means that the spectacle frame 112 rotates with respect to camera device 111 and is captured from different perspectives, but with the same background (as camera device 111, in particular first camera 115, always faces in the same direction and therefore the background is for example formed by a same portion of a wall etc.), and with light coming from the same direction (but, due to the rotation of spectacle frame 112, from different directions relative to spectacle frame 112). This is schematically shown in Figs. 8A and 8B, showing camera device 111 capturing spectacle frame 112 on table 15 for two different rotational positions of table 15 and hence two different perspectives.

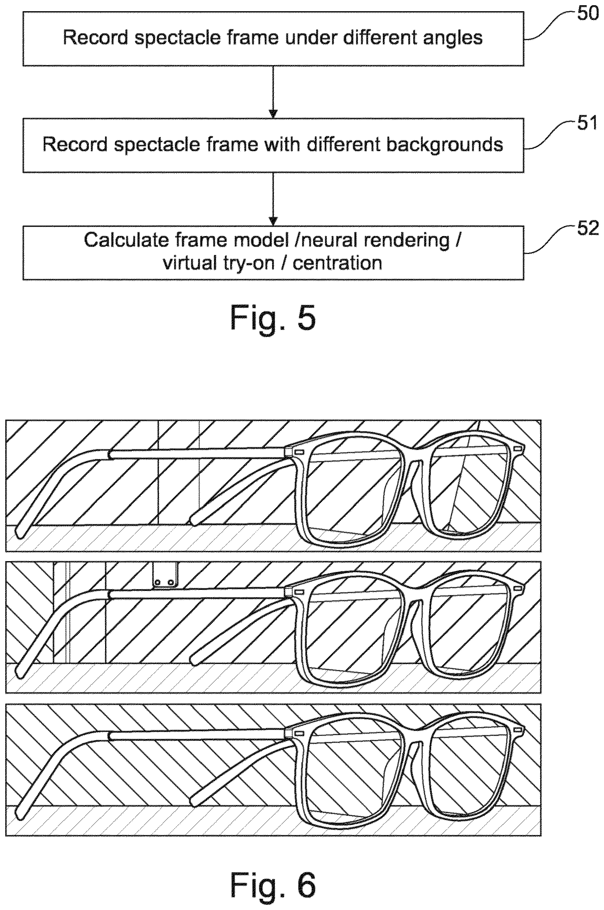

In a second mode, first rotation component 14 is inactive, i.e. does not rotate table 15, while second rotation component 12 rotates the apparatus as explained above. Here, the relative position between camera device 111 and spectacle frame 112 remains the same, but the orientation in the room changes and thus the images of the spectacle frame 112 with the same perspective, but with different background and with lights coming from different directions are captured. This is schematically illustrated in Fig. 6, where a spectacle frame is always captured from the same perspective, but with different backgrounds and with different highlights due to light coming from different directions relative to the spectacle frame.

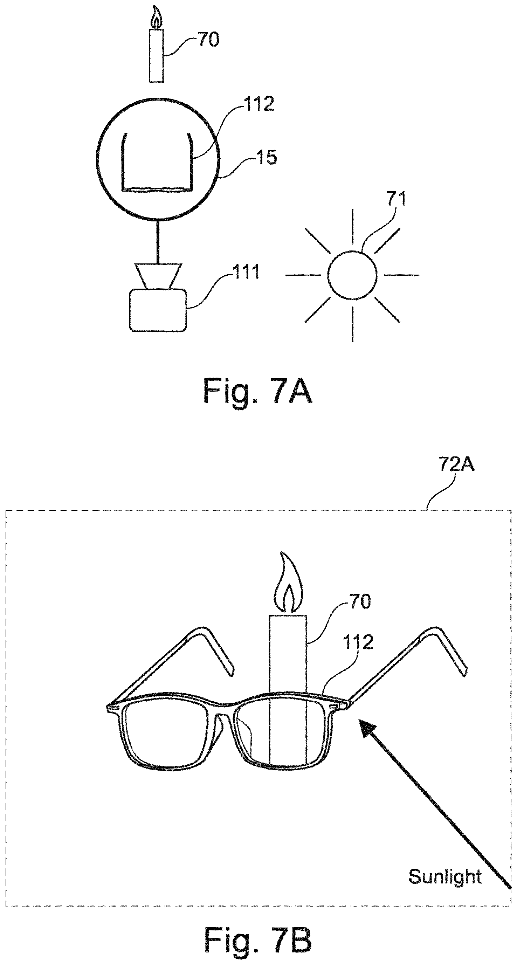

This is further illustrated in Figs. 7A to 7D. Fig. 7A shows camera device 111 capturing spectacle frame 112 on table 15 in a first rotational position of second rotation component 12. Spectacle frame 112 is illuminated by sun 71 (for example as sunlight streaming through a window) and a candle 70 as an example for an artificial light source. Fig. 7B shows an example image 72A thus captured, with an arrow marking the direction from which the sunlight comes. Candle 70 also forms part of the background for spectacle frame 112 in image 72A.

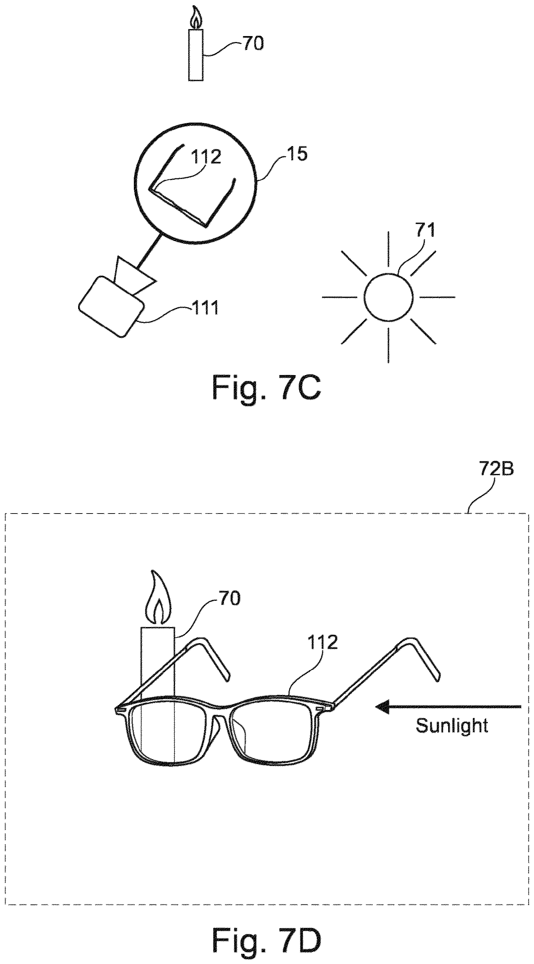

Fig. 7C shows camera device 111 capturing spectacle frame 112 on table 15 in a second rotational position of second rotation component 12, i.e. rotated compared to Fig. 7A, while the environment (candle 70 and sun 71) remains stationary. An example image 72B is shown in Fig. 7D. The perspective under which spectacle frame 112 is captured remains the same, but the illumination direction by the sunlight and also by candle 70 changes, and also the background (represented by candle 70) changes.

The two modes may also be combined, such that for a plurality of different rotational positions of the second component 12, the first rotation component 14 turns the table 15 and images are recorded. In this way, the images with different backgrounds as shown in Fig. 6 may be recorded for different perspectives of the spectacle frame (through the turning of the table 15). Apart from this, as explained above calibration measurements may be performed, for example using second camera 116 or a reflective sphere replacing spectacle frame 112.

A further calibration measurement involves the use of markers, which will now be explained referring to Fig. 2. Such markers may be arbitrary, distinctive patterns that generate meaningful keypoints, e.g. to establish correspondences between images as explained for calibration above.

In Fig. 2, the apparatus of Fig. 1 is schematically shown, with additional calibration markers. In particular, first calibration markers 20 are provided on main part 13, and second calibration markers 21 provided for example on base 11 or any other stationary part of the apparatus. Calibration patterns 20, 21 are depicted as triangular patterns in Fig. 2, but other patterns may also be used.

Calibration pattern 20 serves to calibrate rotation of the first rotation component 14. For example, first camera 115 may capture spectacle frame 112 together with first calibration markers 20. When table 15 is rotated, first calibration markers 20 turn with the table 15, thus enables a determination of the relative position of table 15 and hence spectacle frame 112. With sufficiently precise implementation of first rotation component 14, this calibration may be done in advance, without the need for markers 20. In a similar manner, for calibrating the second rotation component 12, during rotation second calibration markers 21 remain stationary, enabling a determination of the rotational position. The images captured by camera device 111 may then be provided to a remote computer 114 which is not part of the apparatus for further processing, for example to generate a model of the spectacle frame, to render images of the spectacle frame for example for virtual try-on purposes, to use the data to determine centration parameters, to determine properties like transparency of the spectacle frame etc., as explained above. In other embodiments, such calculations and data processing may be performed within the apparatus, for example by the mobile device in case, camera device 111 is such a mobile device.

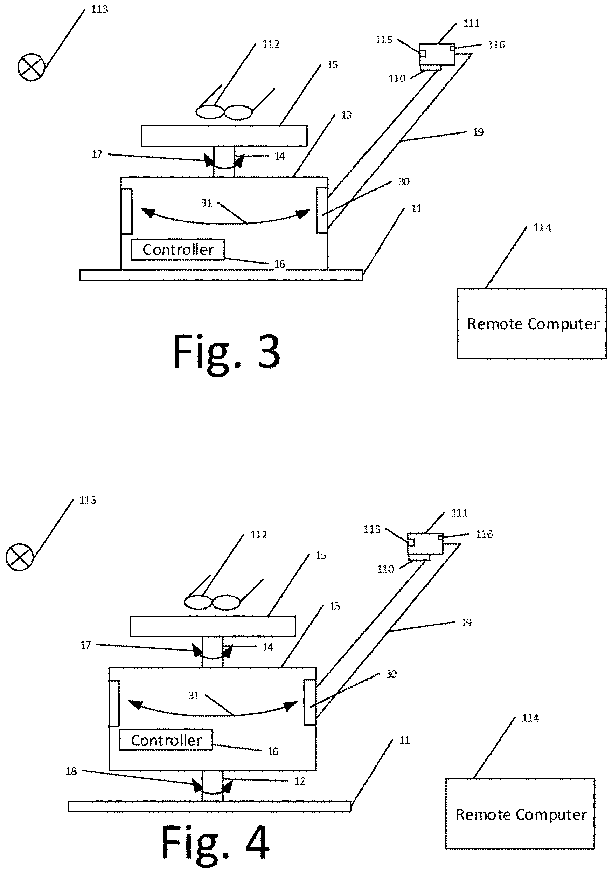

Next, with reference to Figures 3 and 4, modifications of the apparatus of Fig. 1 will be described. Apart from the described modifications, the apparatuses of Figures 3 and 4 correspond to the apparatus of Fig. 1, and corresponding elements bear the same reference numerals and will not be described again.

In the apparatus of Fig. 3, compared to Fig. 1 instead of second rotation component 12, a second rotation component 30 is provided which enables arm 19 together with camera device 111 to rotate around fixed part 13, as indicated by an arrow 31. This allows camera device 111 to capture images of spectacle frame 112 from different directions, i.e. with different perspectives and different backgrounds. To obtain the same effect as the rotation of a second rotation component 12 of Fig. 1, in Fig. 3 first rotation component 14 and second rotation component 13 may be operated for simultaneous rotation, such that table 15 turns synchronously with arm 19. Here, greater precision than in Fig. 1 is needed, as two rotation components have to be operated synchronously.

Fig. 4 illustrates an apparatus, which is essentially a combination of the embodiments of Figures 1 and 2, including both the second rotation component 12 of Fig. 1 and, as a third rotation component, the rotation component 30 of Fig. 3. This gives greater versatility. For example, both the precision of moving camera device 111 and spectacle frame 112 together by second rotation component 12 without the need for mutual adjustment of two rotation components as in Fig. 3 is provided, and additionally arm 19 together with camera 111 may rotate to capture spectacle frames 112 from different perspectives while spectacle frame 112 stays in place, i.e. for example experiences the same illumination.

Fig. 5 is a flowchart illustrating a method according to an embodiment, operating any of the apparatuses previously discussed. For convenience sake, the method of Fig. 5 will be discussed referring to the apparatus of Fig. 1, but it may also be applied to other apparatuses.

At 50, the method comprises recording, i.e. capturing images, of a spectacle frame under different angles. In case of Fig. 1, this is done by rotating table 15 through first rotation component 14, while taking images of spectacle frame 112 using camera 115.

At 51, the method comprises recording the spectacle frame with different backgrounds. In case of Fig. 1, as explained this may be done by rotating the apparatus including table 15 and arm 19 with camera device 111 using second rotation component 12.

At 52, the method then comprises processing the data, for example on remote computer 114. The processing may for example include calculating a frame model, neural rendering of the frame for example in the context of a virtual try-on or centration, or any of the other applications mentioned above.

## Claims

1. An apparatus suitable for scanning a spectacle frame, comprising:
- a first holder (15) for receiving the spectacle frame (112);
- a first rotation component (14) configured to rotate the first holder (15) about a first axis, and
- a second holder (110) for receiving a camera device (111), **characterized by**
- a second rotation component (12; 30) independent from the first rotation component (14) and configured to rotate the second holder (110) about a second axis.

2. The apparatus of claim 1, **characterized in that** the first axis coincides with the second axis.

3. The apparatus of claim 1 or 2, **characterized in that** the second rotation component (12) is configured to jointly rotate the first holder (15) and the second holder (110).

4. The apparatus of claim 3, **characterized by** further comprising a third rotation component (30) independent from the first (14) and second (12) rotation components and configured to rotate the second holder (110) relative to the first holder (15).

5. The apparatus of claim 1 or 2, **characterized in that** the second rotation component (30) is configured to rotate the second holder (110) relative to the first holder (15).

6. The apparatus of any one of claims 1 to 5, **characterized by** including the camera device (111).

7. The apparatus of claim 6, **characterized in that** the camera device (111) includes a first camera (115) facing the first holder (15) and a second camera (116) facing away from the first holder (15)

8. The apparatus of claim 6 or 7, **characterized in that** the camera device (111) comprises a mobile device including at least one camera (115, 116).

9. The apparatus of claim 8, **characterized in that** the mobile device is configured to control operation of the apparatus including the first rotation component (14), the second rotation component (12, 30) and the at least one camera (115, 116).

10. The apparatus of claim 9, **characterized in that** the apparatus comprises a controller (16) configured to control the first rotation component (14) and the second rotation component (12; 30) based on commands received from the mobile device.

11. The apparatus of any one of claims 1 to 8, **characterized in that** the apparatus comprises a controller (16) configured to control the first rotation component (14), the second rotation component (12; 30) and the camera device (111).

12. The apparatus of any one of claims 9 to 11, **characterized in that** the mobile device and/or the controller (16) is configured to control the apparatus to at least
- capture a plurality of images of the spectacle frame (112) at different rotation positions of the first rotation components (14) and therefore of the spectacle frame under different angles
and
- capture a plurality of images of the spectacle frame (112) with a plurality of different positions of the second rotation components(12; 30) to provide images of the spectacle frame (112) with different backgrounds.

13. The device of claim 12, **characterized in that** the apparatus is configured to provide the images to a remote computer (114) for further processing of the images.

14. The apparatus of any one of the proceeding claims, **characterized in that** the apparatus is configured to perform at least one calibration measurement selected from the group consisting of
- a calibration of the first rotation component (14) using first calibration markers (13),
- a calibration of the second rotation component (12; 30) using second calibration markers (21), and
- a calibration of the environment of the apparatus using one of a reflective sphere placed on the first holder (15) or a camera (116) facing away from the first holder (15).

15. A method of operating the apparatus of any one of claims 1 to 13, **characterized by**
comprising:
operating the apparatus to capture images of a spectacle frame (112) under different perspectives, and
operating the apparatus to capture images of the spectacle frame (112) with different backgrounds.
